# EUROPEAN PATENT APPLICATION

(11) **EP 1 501 036 A1**
(43) Date of publication of application: **26.01.2005**
(21) Application number: 04270004.7
(22) Date of filing: 22.07.2004
(51) Int. Cl.: G06F 17/60, G06T 17/40

(54) **Method for Three-Dimensional Inventory Link**

(30) Priority: 22.07.2003 US 489331 P
(71) Applicant: AT&T Corp., New York, NY 10013-2412 (US)
(72) Inventor: Engelmann, John, Steven, Roswell 30075 (US); Eslambolchi, Hossein, Los Altos Hills 94022 (US); Gaddamanugu, Bala Surya Siva Sri, Alpharetta 30005 (US); Rangavittal, Prakash, Alpharetta 30005 (US); Stewart, Harold J, Alpharetta 30005 (US); Brittain, Eric Audwoyne, Cambridge 02139 (US)
(74) Representative: Suckling, Andrew Michael

(57) **Abstract**

In accordance with the teachings of the present invention, a method is presented for providing an end user with a virtual reality experience. A server generates three-dimensional information. The three-dimensional information is generated using real-time alarm information representing an alarm, VRML schema information and meta-data. A client receives the three dimensional information. A three-dimensional image of a network operations centre including a device responsible for the alarm is presented in a GUI. Operating the GUI allows the end user to experience moving through the operations centre to the location of the device responsible for the alarm.

## Description

### BACKGROUND OF THE INVENTION

### Cross Reference to Related Applications:

This application is a continuation of provisional application serial number 60/489,331 entitled "METHOD FOR THREE-DIMENSIONAL INVENTORY LINK" filed on July 22, 2003, the contents of which are incorporated herein by reference.

### Field of the Invention:

This invention relates to data management. Specifically, the present invention relates to data processing.

### Background of the Invention:

A network operations centre is often considered the heart of a network. The network operations centre often includes hardware and software for monitoring the network. With the size of modern networks, these network operations centres are typically very large. Therefore, many rows of racks and devices may be resident in a modern network operations centre. In addition, because of the size and complexity of many networks, many distributed network operations centres are deployed. Each of these centres typically monitors a component of the network.

In a typical network operations centre, a device in the network operations centre may support several end users. For example, a server resident in a network operations centre may support several end users. Therefore, when there is a network problem, not only does the network operations centre personnel have to identify the device, but also they are required to identify the impacted end users.

When problems occur in a network, it is important that the network operations centre personnel identify and quickly access the device that has the problem. However, even after information is provided on a network problem, it is sometimes difficult to locate the device that is responsible for the problem in the network operations centre. For example, in large network operations centres, it may be difficult to locate the row, the column, the aisle, or the rack housing a device that is causing a network problem. Further, it may be difficult to locate the additional users that will be affected by the network problem if you are unable to locate the specific device that is causing the network problem.

In conventional network operations centres, since the network operators are usually unable to locate the problem device in the network operations centre, the network operators typically will call a series of customers that they think may be affected by the problem. The inability to specifically locate the device in the network operations centre which in turn results in wasted time contacting unaffected end users is an inefficient and an ineffective way of running a network operations centre.

Thus, there is a need for a method of locating a network problem in a network operations centre. There is a need for a method of identifying customers affected by a network problem in a network operations centre. Lastly, there is a need for a method of quickly identifying detailed data related to a network problem so that the network problem may be resolved.

### SUMMARY OF THE INVENTION

A method of locating a device associated with a network problem is presented. In one embodiment of the present invention, a three-dimensional image of a network operations centre is presented. The three-dimensional image is presented in a graphical user interface (GUI). A network operator may operate the GUI. Operating the GUI causes a series of images to be displayed. The series of images create a virtual reality experience for the network operator. As such, the network operator may explore a network operations centre by operating a GUI that displays a sequence of three-dimensional images depicting the network operations centre. In addition, the three-dimensional images include alarm indication. For example, a red light may be displayed in a specific rack associated with an alarm. By operating a GUI (i.e., panning, zooming, etc.), a sequence of images are presented which give the network operator the experience of moving through the network operations centre to the location of the device responsible for the alarm.

Once the alarm has been located, in a second method of the present invention, the network operator may operate the GUI and perform data drilling. To perform data drilling, the network operator may select the alarm indication. Selecting the alarm indication causes more details to be displayed on the selected item. For example, if a device is selected, three-dimensional images of the internal architecture of the device are displayed. By operating a GUI (i.e., panning, zooming, etc.), a sequence of images is presented which give the network operator the experience of moving through the internal architecture. This is a recursive process that may be performed to different levels of detail.

A method of processing information comprises the steps of receiving a query; receiving alarm information representing an alarm in a network; and generating three-dimensional information in response to the query and in response to the alarm information, where the three-dimensional information is capable of display as a three-dimensional image including an indication of the alarm.

A method of processing information comprises the steps of receiving three-dimensional information including alarm information, the three-dimensional information representing a three-dimensional image of a network operations centre and the alarm information representing a current problem in a network; and displaying an alarm indication in the three-dimensional image.

A method of processing information comprises the steps of generating first three-dimensional information capable of display as a first three-dimensional image, the first three-dimensional image including an object; receiving a query generated in response to input identifying the object; and generating second three-dimensional information, the second three-dimensional information capable of display as a second three-dimensional image, the second three-dimensional image providing details on the object.

### BRIEF DESCRIPTION OF THE DRAWINGS

Fig. 1 displays a network architecture implementing the teachings of the present invention.

Fig. 2 displays a block diagram of a computer operating in accordance with the teachings of the present invention.

Fig. 3 displays a flowchart depicting a method of operating a client in accordance with the teachings of the present invention.

Fig. 4 displays a flowchart depicting a method of operating a server in accordance with the teachings of the present invention.

Fig. 5 displays a flowchart depicting a three-dimensional method implemented in accordance with the teachings of the present invention.

Fig. 6 displays a flowchart depicting a data-drilling method implemented in accordance with the teachings of the present invention.

Fig. 7 displays a graphical user interface including a three-dimensional image implemented in accordance with the teachings of the present invention.

### DESCRIPTION OF THE INVENTION

While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

Three-dimensional images of a network operations centre are presented to an end user. The three-dimensional images are presented in a GUI. As such, an end user connected to a network can operate the GUI and identify the location of a device responsible for a network problem. For example, in a web server environment, where hundreds of web servers are operating, an end user with a connection to the network may operate a GUI and determine the location of the specific web server that is responsible for a network problem. As such, network operators may explore and troubleshoot the network from their desk. Further, by operating the GUI, the network operators may experience moving through the network operations centre and inspecting the device responsible for the problem. Should the network operators attempt to investigate the device, the network operators may then implement a drilling method presented in the present invention and investigate the internal architecture of the problem device. Using the data-drilling methodology of the present invention, the network operators may move through the internal architecture and locate an interface card in the device that is responsible for the problem.

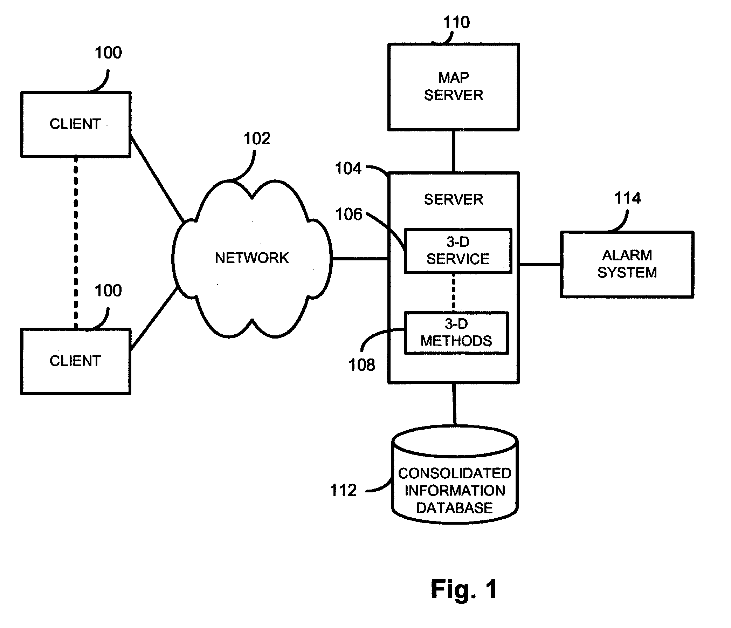

Fig. 1 displays a network architecture implemented in accordance with the teachings of the present invention. In Fig. 1, client(s) 100 are shown. Each client 100 is in communication with a network 102. A server 104 communicates with the client 100 across the network 102. In one embodiment of the present invention, the server 104 provides 3-D service (i.e., Web Services) 106, which launches 3-D methods 108. The server 104 is in communication with a map server 110 and a consolidated information database 112. Further, the server 104 is in communication with an alarm system 114.

Network components, such as the client 100, the server 104, the map server 110, the consolidated information database 112, and the alarm system 114, may be implemented with software, hardware, or a combination of software and hardware. Further, the network components may each operate in a consolidated network, a distributed network, or each network component may operate in an individual network, such as a packet-switched network, a circuit-switched network, a wireless network, etc. Further, network 102 may be implemented as a packet-switched network, a circuit-switched network, a wireless network, etc.

In one embodiment of the present invention, the network architecture of Fig. 1 is implemented in the Internet or World Wide Web (web) and operates based on web-based technology. Selected web-based technology includes, but is not limited to, Web Services, Virtual Reality Markup Language (VRML), Transmission Control Protocol/Internet Protocol (TCP/IP), Extensible Markup Language (XML), HyperText Markup Language (HTML), HyperText Transfer Protocol (HTTP), scripts, Active Server Pages (ASP), Active X controls, web browsers, etc. As such, the network components, client 100, server 104, map server 110, consolidated information database 112, and alarm system 114, may each be implemented with web-based technology.

The network components may operate in a Web Services architecture. Web Services are promulgated in the World Wide Web Consortium (W3C) where Web Services, (W3C Working Draft, 14 November 2002, (w3.org/TR/2002/WD-ws-arch-20021114)), are defined as the programmatic interfaces used for application-to-application communication over the web. Web Services provide a standard means of communication among different software applications running on a variety of platforms and/or frameworks. Selected Web Services-related standards and components include Simple Object Access Protocol (SOAP), where SOAP is an XML-based protocol for exchanging and communicating information between computers (SOAP Version 1.2, Part 1: Messaging Framework W3C Candidate Recommendation, 19 December 2002, (w3.org/TR/soap12-part1/)); Web Services Description Language (WSDL), where WSDL describes how one software system can connect and utilize the services of another software system over the Internet (Web Services Description Language (WSDL), Version 1.2, W3C Working Draft, 24 January 2003, (w3.org/TR/wsdl12/)); Universal Description Discovery and Integration (UDDI), Web Services Version 3.0, where UDDI is a directory for registering and finding Web Services (Published Specification, 19 July 2002, (uddi.org (v3.00-published-20020719))); HyperText Transfer Protocol (HTTP) (HTTP 1.1, IETF RFC 2616, 1999), etc.

In addition, the method of the present invention is implemented with Virtual Reality Markup Language (VRML). VRML is a specification promulgated by the Web3D Consortium (ISO/IEC 14772-1:1997 and ISO/IEC 14772-2:2002) and used for displaying three-dimensional objects on the web or in an environment implementing web technology. For example, VRML may be thought of as a three-dimensional equivalent of HTML. VRML files are typically viewed using a web browser or software plug-ins. However, other viewer mechanisms, such as hardware or additional software, may be used to view VRML files. VRML produces three-dimensional images that appear on a display or screen. VRML is typically implemented in a GUI that can be operated by an end user. As such, when the end user operates the GUI to move forward, move left, move right, move up, move down, etc., a sequence of three-dimensional images are displayed which give the end user the virtual reality experience of moving forward, moving left, moving right, moving upward, moving downward, etc.

It should be appreciated that while a specific implementation of Web Services and VRML will be described and discussed in the present invention, variations of this implementation are within the scope of the present invention. Further, consistent with all standards, various versions of the foregoing standards will be promulgated and distributed in the future. The method of the present invention is applicable to the underlying model, architecure, and methodology used in Web Services and VRML, and as a result, future versions of these specifications are within the scope of the present invention.

Each component of the network architecture of Fig. 1 may be deployed in a variety of implementations. For example, the client 100 may be implemented with a computer. In one embodiment of the present invention, client 100 is implemented with web-based technology, such as web browser, VRML browser, plug-ins, ASP, Web Services, HTML, etc. As such, an end user may operate a GUI, such as a web browser, and subscribe to services, such as 3-D service 106, operating on the server 104.

In one embodiment of the present invention, the server 104 is also implemented with web-based technology in a computer. As such, the server 104 may be implemented with a Web Services architecture and offer services, such as 3-D service 106. In an embodiment of the present invention, the 3-D service 106 launches methods to acquire information from the map server 110 and the alarm system 114. In addition, the 3-D service 106 launches 3-D methods 108 to generate three-dimensional information. In an embodiment of the present invention, the three-dimensional information is in compliant with VRML (i.e., VRML information).

Consolidated information database 112 is in communication with the server 104. The consolidated information database 112 may be implemented in a computer with web-based technology. For example, consolidated information database 112 may be implemented with ASP, XML, etc. In an alternative embodiment of the present invention, the consolidated information database 112 may be queried with query commands, such as the commands that are compliant with Structured Query Language (SQL).

The consolidated information database 112 stores information from several locations in the network 102. For example, the consolidated information database 112 stores alarm information generated by the alarm system 114. The consolidated information database 112 stores detailed inventory information, such as information on floor plans, information on racks in the floor plan, information on aisles in the floor plan, information on rows in the floor plan, information on devices (i.e., servers, bridges, racks, etc.), information on ports associated with devices, information on the power and circuits supporting the devices. The consolidated information database 112 stores information on facilities connecting devices, information on services offered on facilities, and information on users operating on the facilities. It should be appreciated that the consolidated information database 112 stores information on all aspects of the network operations from the physical facilities to the human resources information, network performance information, network problem information, etc.

Map server 110 includes any system that provides map information. In one embodiment of the present invention, the map server 110 includes a map database including longitude and latitude information associated with various points on a map. The longitude and latitude information may be communicated to the client 100 and displayed on the client 100 as a map. As such, the client 100 may include client software capable of receiving map information and displaying the map information in a browser. For example, the map server 110 may be implemented with Autodesk MapGuide, a registered trademark of Autodesk Incorporated. In a second embodiment of the present invention, the map information is provided by a Universal Resource Locator (URL) that provides updated map and weather information. In another embodiment of the present invention, the map information may be implemented in layers. For example, the map information representing a country is provided in a first layer, the map information representing a state is provided in a second layer, and the map information representing a city is provided in a third layer. As such, an end user operating client 100 may operate the map (i.e., GUI) and move between the layers. For example, an end user may select a state and the client 100 will respond by displaying an image of the cities in the state.

Alarm system 114 is a system capable of acquiring alarm information. For example, in one embodiment of the present invention, the alarm system 114 polls systems or devices in a network 102 to acquire alarm information. In another embodiment of the present invention, the alarm system 114 receives alarm information from systems in a network 102.

The alarm information includes any information that alerts an end user of a network problem. The alarm information may alert an end user of network problems, such as power alarm failure, network congestion, system malfunction, problems identified by an end user, etc. In one embodiment of the present invention, the alarm information includes real-time alarm information representing a current alarm condition in the network 102.

During operation, a client 100 accesses the server 104 across the network 102 to subscribe to a service, such as 3-D service 106. Subscribing to the 3-D service 106 enables an end user to operate the service by providing the appropriate input to the service and configuring the client 100 to communicate with the service. Subscribing to the service may include authentication of an end user and configuration of the client 100, operating a GUI on the client 100, selecting a URL for access to the server 104, etc.

Once an end user subscribes to the 3-D service 106, the end user may use the client 100 to communicate queries to the server 104. During operation, the server 104 operates the 3-D service 106. The 3-D service 106 performs a variety of methods to provide the service. For example, the methods (1) acquire map information, (2) acquire alarm information, (3) store information in the consolidated information database 112, (4) acquire information from the consolidated information database 112, (5) launch 3-D methods 108, etc.

In response to a query identifying a location on a map, the 3-D service 106 performs methods that acquire map information and communicate the map information to the client 100. The methods acquire map information from the map server 110. The methods also acquire alarm information from the alarm system 114 and store the alarm information in the consolidated information database 112. The methods then access the information from the consolidated information database 112 in response to a query. The methods launch 3-D methods 108 that generate three-dimensional information.

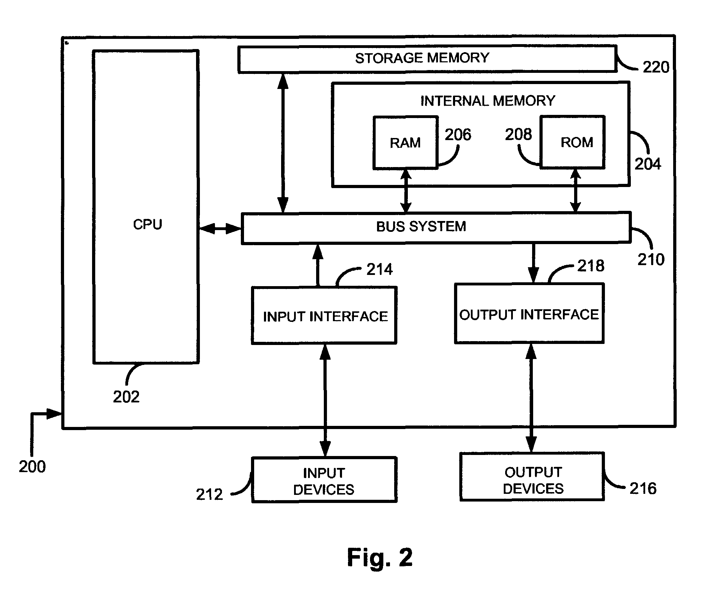

Fig. 2 displays a block diagram of a computer 200 operating in accordance with the teachings of the present invention. In one embodiment of the present invention, client 100, server 104, map server 110, consolidated information database 112, and alarm system 114 of Fig. 1 may be implemented with computer 200. A central processing unit (CPU) 202 performs central processing in computer 200. Internal memory 204 is shown. The internal memory 204 includes short-term memory 206 and tong-term memory 208. The short-term memory 206 may be Random Access Memory (RAM) or a memory cache used for staging information. The long-term memory 208 may be a Read Only Memory (ROM) or an alternative form of memory used for storing information. In one embodiment of the present invention, a short-term memory, such as RAM 206, may be a display memory and used for storing a GUI for display on a monitor (i.e., screen, display). A storage memory 220, such as a hard drive, is also shown. A bus system 210 is used by the computer 200 to communicate information from short-term memory 206, long-term memory 208, storage memory 220, input interface 214, output interface 218, and CPU 202.

Input devices, such a joystick, a keyboard, a microphone, a communication connection, or a mouse, are shown as 212. The input devices 212 interface with the system through an input interface 214. Output devices, such as a monitor, a speaker, a communication connection, etc., are shown as 216. The output devices 216 communicate with the computer 200 through an output interface 218.

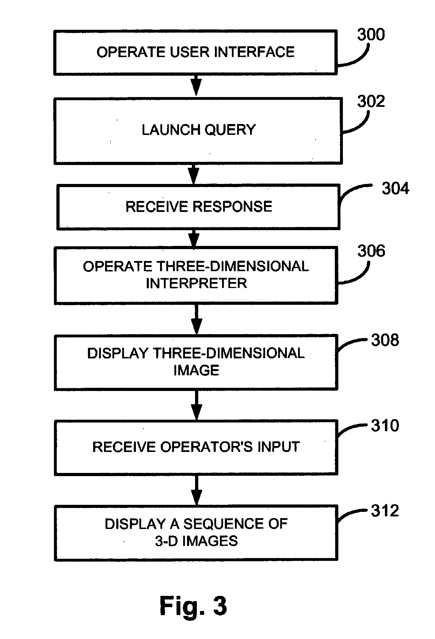

Fig. 3 displays a method of operating a client in accordance with the teachings of the present invention. Fig. 1 will be discussed in conjunction with Fig. 3. An end user operates a user interface on client 100 as stated at 300. In one embodiment of the present invention, the user interface is implemented with a web browser including a VRML interpreter, such as a VRML browser, a web browser with a VRML plug-in, etc. A plug-in is a hardware or software module that adds a specific feature or service to a larger system, such as a web browser or client 100. Operating the user interface may include selecting items from a pop-up list, selecting objects displayed in an image, etc.

Operating the user interface launches a query as stated at 302. The query may be formatted with web-based technology, such as XML, etc. The query is generated based on the input received from an end user. If an end user selects an object on a map, the query is used by the server 104 to retrieve more-detailed map information. If an end user identifies data, such as a device, in an image displayed on the client 100, the query is used by the server 104 to retrieve more details on the device.

The client 100 receives a response to the query as stated at 304. When the query retrieves map information, client software, may be used to display the information in the response. When the response includes three-dimensional information, a three-dimensional interpreter interprets the three-dimensional information as stated at 306. The three-dimensional interpreter may include software, hardware, or a combination of software and hardware used to interpret three-dimensional information. In one embodiment of the present invention, the three-dimensional interpreter is implemented with three-dimensional viewer, such as Cartona VRML Client 4.0, a registered trademark of Parallel Graphics Limited.

The three-dimensional interpreter is used to display three-dimensional images on client 100 as stated at 308. In one embodiment of the present invention, the three-dimensional images include images of a floor layout in a network operations centre including aisles, racks, devices, etc. The three-dimensional images are generated in a web browser. An end user operates the web browser and a client 100 receives operator's input as stated at 310. The operator input may indicate a left movement, a right movement, movement upward, movement downward, panning, zooming into the image, zooming out of the image, selection of an object for more details, etc.

In response to the input, the client 100 displays a sequence of images as stated at 312. The sequence of images appear on a display associated with the client 100 and create the experience of left movement, right movement, movement upward, movement downward, panning, zooming into an image and out of an image, such as a network operations centre, etc.

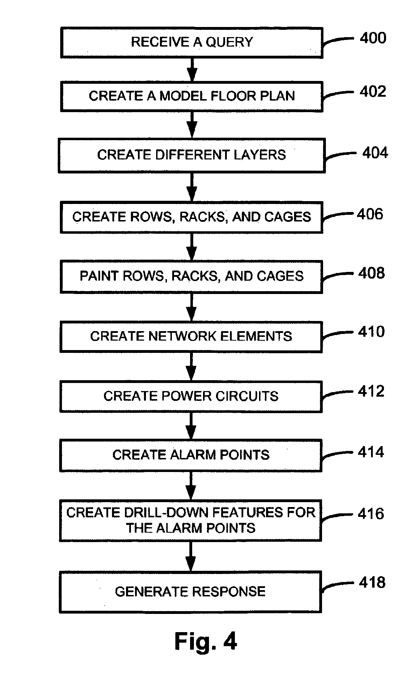

Fig. 4 displays a flowchart depicting a method of operating a server in accordance with the teachings of the present invention. Fig. 1 will be discussed in conjunction with Fig. 4. A query is received in server 104 as stated at 400. An end user operates a GUI provided by client 100 and generates the query. In one embodiment of the present invention, the query identifies a location, such as a building or a network operations centre that an end user would like to see a three-dimensional image of.

In response to the query, the server 104 creates a model floor plan as stated at 402. Creating a model floor plan includes acquiring floor-plan information. The floor-plan information provides the layout of the floor plan. The floor-plan information may be stored in the map server 110 or the floor-plan information may be stored in a separate database, such as a consolidated information database 112, as computer-aided design (CAD) files. In one embodiment of the present invention, the floor-plan information is stored as MapGuide files in the map server 110. Once the floor-plan information is acquired, 3-D methods 108 are launched to generate three-dimensional information. The three-dimensional interpreter operating on client 100 is used to display a three-dimensional image of the floor plan. In one embodiment of the present invention, the three-dimensional information is VRML information; however, it should be appreciated that other 3-D information is within the scope of the present invention.

AT 404, different layers of information are created. Creating layers of information includes generating three-dimensional information (i.e., VRML information) of the different components in the three-dimensional image (i.e., rows, racks, devices, etc.). For example, a rack layer, a cage layer, and a power layer are created. The layers relate to the network operations centre associated with the query received at step 406. The server 104 accesses rack-layer information, cage-layer information, and power-layer information from the consolidated information database 112 to create the rack layer, the cage layer, and the power layer, respectively. The 3-D methods 108 then convert the rack-layer information, the cage-layer information, and the power-layer information into three-dimensional information, such as VRML information. The rack-layer information, power-layer information, etc. includes information on the length, width, floor position, style, etc. of the rack, cage, and power devices, respectively.

At 406, all the rows, racks, and cages associated with the network operations centre are created. Creating all the rows, racks, and cages associated with the network operations centre includes generating three-dimensional information (i.e., VRML information) of all the rows, racks, and cages associated with the network operations centre. For example, the server 104 accesses row information, rack information, and cage information from the consolidated information database 112. The row information, rack information, and cage information include length, width, and height information associated with the rows, racks, and cages that are also stored in the consolidated information database 112. The 3-D methods 108 then convert row information, rack information, and cage information into three-dimensional information, such as VRML information.

At 408, all the rows, racks, and cages are painted in their respective colours based on their reservation status (i.e., whether the rows, racks and/or cages are reserved for use), rack type, and rack status. Painting the rows, racks, and cages includes using 3-D methods 108 to generate the three-dimensional information, such VRML information, which will appear as a specific colour when displayed using the client 100.

At 410, 3-D methods 108 are used to create all of the devices in the network operations centre. The devices include devices that will reside in the aisles, are mounted in the racks, cages, etc. The devices may include server, routers, bridges, power units, and any device that would reside in a network operations centre or any device that an end user would like to display in a network operations centre.

At 412, the 3-D methods 108 create power circuits that provide power to the equipment located in the network operations centre, such as the devices, racks, customer equipment, etc. The 3-D methods 108 are used to label power-circuit attributes, such as circuit identification numbers, voltage, amperes, phase, etc.

At 414, alarm points are created if any active alarms are present. If an alarm is generated by the alarm system 114, alarm information is generated. The alarm information is acquired (i.e., polling, receiving) by the server 104. The alarm information may be stored in the consolidated information database 112 or processed in real time by the 3-D methods 108. If the alarm information is stored in consolidated information database 112, the 3-D methods 108 retrieve the alarm information and generate three-dimensional information, such as VRML-compliant information. The three-dimensional information will cause an indication of the alarm to be displayed in a three-dimensional image of the network operations centre generated by client 100.

At 416, the 3-D methods 108 are used to create a drill-down feature. The drill-down feature enables an end user to select an item in a GUI displayed by client 100. The GUI includes a three-dimensional image. Selecting the item results in the display of another three-dimensional image, which provides more details on the selected item. For example, selecting a three-dimensional rack in a three-dimensional image may result in an image displaying each device in the three-dimensional rack. Then selecting a device in the three-dimensional rack may result in a three-dimensional image that displays the circuit boards within the device, etc.

At 418, a response is generated. The response communicates three-dimensional information to the client 100. In another embodiment of the present invention, the response may be communicated at each step (402, 404, 406, 408, 410, 412, 414, 416) of the method depicted by Fig. 4. In another embodiment of the method depicted by Fig. 4, a response may be communicated at selected steps in the process. Once the client 100 receives the response, a three-dimensional image is displayed.

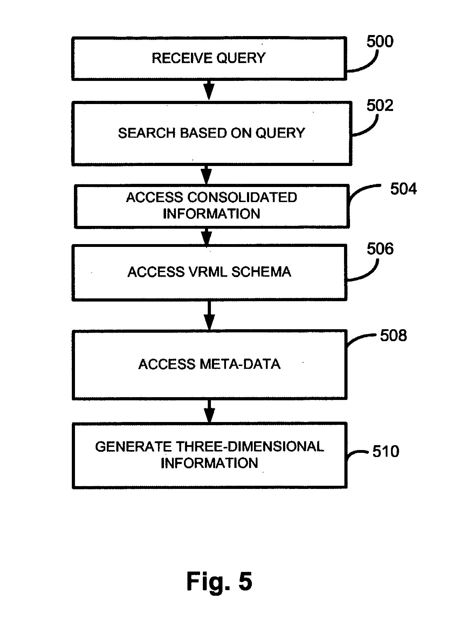

Fig. 5 displays a flowchart depicting a three-dimensional method implemented in accordance with the teachings of the present invention. Fig. 1 will be discussed in conjunction with Fig. 5. A 3-D service 106 launches 3-D methods 108. As such, the 3-D service 106 passes a query received in server 104 to the 3-D methods 108 as stated at 500. The 3-D methods 108 perform a search of the consolidated information database 112 or the map server 110 based on the query as stated at 502. The 3-D methods 108 then access consolidated information (i.e., information meeting the criteria of the query) as stated at 504. For example, if an end user selects a network operations centre on the map, the query would provide a search key associated with that network operations centre. Therefore, the 3-D methods 108 may perform a search (i.e., SQL query) of the consolidated information database 112 for all data associated with the key. For example, if an end user selects an aisle, the 3-D methods 108 may perform a search of all of the aisle information (i.e., information representing an aisle) associated with the search key. The aisle data may include information on the length of the aisle, the colour of the aisle, the location relative to other aisles, the racks in the aisle (i.e., rack data), the devices in the aisle (i.e., device data). VRML schema and meta-data are also acquired as stated by 506 and 508, respectively. The VRML schema provides the syntax and grammar of the VRML language. The meta-data is ancillary data required to generate VRML information such as the file name of a file (i.e., including required data), the path of the file, the version of the VRML schema that is in use, etc. As stated at 510, three-dimensional information is then generated using alarm information (i.e., from consolidated information database 112), the VRML schema and the meta-data.

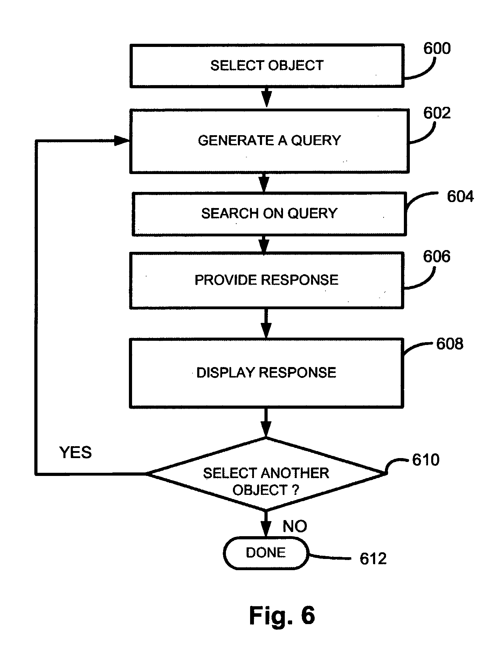

Fig. 6 displays a flowchart depicting a data-drilling method implemented in accordance with the teachings of the present invention. Fig. 1 will be discussed in conjunction with Fig. 6. Client 100 generates a GUI. The GUI includes a three-dimensional image with selectable items (i.e., first objects). An end user selects an object as stated at 600. Selecting a first object generates a query as stated at 602. The query is communicated across the network 102 to the server 104. The server 104 performs a search based on the query as stated at 604. The search is performed using map server 110, consolidated information database 112, or a combination of the two. The results of the search are processed by the 3-D methods 108 and three-dimensional information is generated. The server 104 provides a response as stated at 606. The response is communicated across the network 102 to the client 100. The client 100 is used to generate a display of the response as stated at 608. The display provides more details on the first object. The response includes the three-dimensional information and the client 100 uses the response to display a three-dimensional image with selectable objects (i.e., second objects). An end user may select another object as stated at 610. If the end user selects a second object, the method depicted in Fig. 6 is performed again. However, the next time that the client 100 displays a response as stated at 608, the three-dimensional image will provide more details on the second object. As such, data drilling may be performed by providing more details on a selected object. The additional details are then presented as selectable three-dimensional objects. On the other hand, if an end user decides not to select another object, the method is done as stated at 612.

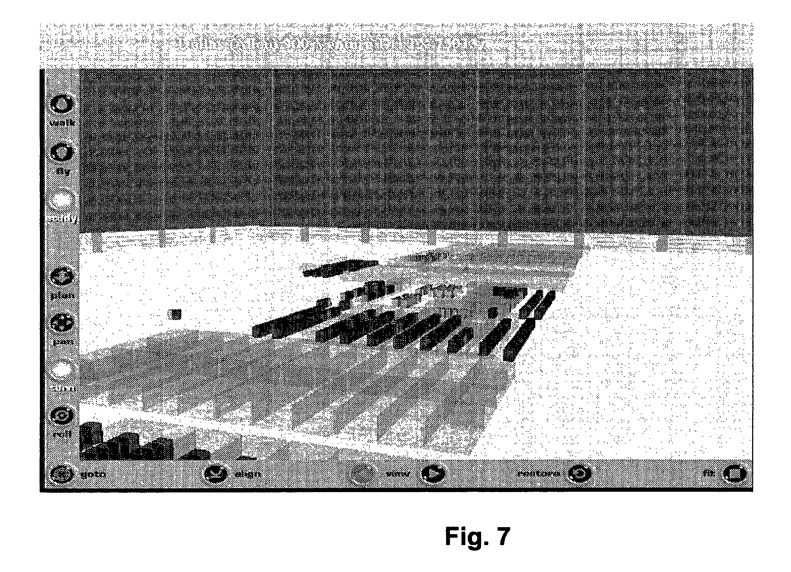

Fig. 7 displays a GUI including a three-dimensional image implemented in accordance with the teachings of the present invention. The three-dimensional image represents a network operations centre with rows, racks, columns, devices, etc. By operating the GUI, an end user may generate a sequence of images that creates a virtual reality experience for the end user. For example, a walk button, fly button, study button, plan button, pan button, turn button, roll button, goto button, align button, view button, restore button, and fit button are displayed.

Selecting the walk button displays a sequence of images that gives an end user the experience of walking through the network operations centre. Selecting the fly button displays a sequence of images that gives the end user the experience of flying through the network operations centre. Selecting the study button provides a sequence of images that provides more details on an identified object. Selecting the study button enables data drilling to occur. Selecting the plan button displays a sequence of images that gives the end user the experience of moving across a plan view of the network operations centre. Selecting the pan button displays a sequence of images that gives the end user the experience of panning across the network operations centre. Selecting the turn button displays a sequence of images that gives the end user the experience of turning in the network operations centre. Selecting the roll button displays a sequence of images that gives the end user the experience of performing a horizontal roll in the network operations centre. Selecting the goto button takes an end user to a location in the network operations centre. Selecting the align button aligns the GUI and the three-dimensional image. Selecting the view button displays a sequence of images that gives the end user the experience of moving in a selected direction through the network operations centre. Selecting the restore button restores the three-dimensional image. For example, if any new network alarms are present, the new network alarms would be visible after hitting the restore button. Selecting the fit button resizes the three-dimensional image.

Thus, the present invention has been described herein with reference to a particular embodiment for a particular application. Those having ordinary skill in the art and access to the present teachings will recognize additional modifications, applications, and embodiments within the scope thereof.

It is, therefore, intended by the appended claims to cover any and all such applications, modifications, and embodiments within the scope of the present invention.

## Claims

1. A method of processing information comprising the steps of:
receiving a query;
receiving alarm information representing an alarm in a network; and
generating three-dimensional information in response to the query and in response to the alarm information, where the three-dimensional information is capable of display as a three-dimensional image including an indication of the alarm.

2. A method of processing information as set forth in claim 1, further comprising the step of communicating the three-dimensional information.

3. A method of processing information as set forth in claim 1, wherein three-dimensional information represents a network operations centre.

4. A method of processing information as set forth in claim 1, wherein three-dimensional information is compliant with Virtual Reality Markup Language.

5. A method of processing information as set forth in claim 1, wherein the alarm information represents a power alarm.

6. A method of processing information as set forth in claim 1, wherein the alarm information represents a performance alarm.

7. A method of processing information as set forth in claim 1, wherein the alarm information represents a device alarm.

8. A method of processing information as set forth in claim 1, wherein the query is communicated with a HyperText Transfer Protocol request.

9. A method of processing information as set forth in claim 1, wherein the three-dimensional information is generated using Web Services.

10. A method of processing information as set forth in claim 1, wherein the alarm information is communicated using web-based technology.

11. A method of processing information as set forth in claim 1, wherein the alarm information is communicated simultaneously to a plurality of users.

12. A method of processing information as set forth in claim 1, wherein the step of receiving the alarm information is performed with Extensible Markup Language.

13. A method of processing information as set forth in claim 1, wherein the step of receiving the alarm information is performed with Simple Object Access Protocol.

14. A method of processing information as set forth in claim 1, wherein the step of receiving the alarm information is performed with HyperText Transfer Protocol.

15. A method of processing information as set forth in claim 1, wherein a method is performed in a server.

16. A method of processing information comprising the steps of:
receiving three-dimensional information including alarm information, the three-dimensional information representing a three-dimensional image of a network operations centre and the alarm information representing a current problem in a network; and
displaying an alarm indication in the three-dimensional image.

17. A method of processing information as set forth in claim 16, wherein the step of receiving three-dimensional information including alarm information is performed in response to generating a query.

18. A method of processing information as set forth in claim 16, wherein the step of displaying an alarm indication in the three-dimensional image is performed with a web browser.

19. A method of processing information comprising the steps of:
generating first three-dimensional information capable of display as a first three-dimensional image, the first three-dimensional image including an object;
receiving a query generated in response to input identifying the object; and
generating second three-dimensional information, the second three-dimensional information capable of display as a second three-dimensional image, the second three-dimensional image providing details on the object.

20. A method of processing information as set forth in claim 19, wherein the first three-dimensional information is generated with Virtual Reality Markup Language.
